# EUROPEAN PATENT APPLICATION

(11) **EP 4 170 508 A1**
(43) Date of publication of application: **26.04.2023**
(21) Application number: 21848655.3
(22) Date of filing: 11.06.2021
(51) Int. Cl.: G06F 15/173

(54) **PARALLEL AND DISTRIBUTED COMPUTING SYSTEM**

(30) Priority: 30.07.2020 JP 2020129496
(71) Applicant: Information Science Laboratory, Ltd., Niigata-shi, Niigata 950-2074 (JP); Nis Plus Co., Ltd., Tokyo 112-0002 (JP)
(72) Inventor: MATSUMOTO, Takashi, Niigata-shi, Niigata 950-2074 (JP)
(74) Representative: Isarpatent
(86) International application number: PCT/JP2021/022269
(87) International publication number: WO 2022/024562

(57) **Abstract**

The present invention provides a means that enables a reception-side process on which a remote memory operation has been performed by an MBCF to recognize a content of the memory operation and perform necessary processing at low cost. A transmission-side process transmits an operation request packet including an identifier of a reception-side process, an operation target address that defines a memory area of the reception-side process, a data size to be written, a data sequence, and a structure address that defines a history memory area for temporarily recording an operation content history in the reception-side process. A transmission destination computer receives the operation request packet, stores the data sequence in the memory area defined by the reception-side process and the operation target address, and records the operation target address, the data size written, and information of the transmission-side process in the history memory area as operation content.

## Description

### Technical Field

The present invention relates to a parallel and distributed computing system in which a plurality of computers including a processor including a translation lookaside buffer (TLB), a physical memory, and a network interface controller (NIC) directly accessible to the physical memory are interconnected via a data link.

### Background Art

As described in Non Patent Literature 1, the inventors of the present application have been developing a memory-based communication facility (MBCF) of a communication and/or synchronization mechanism based on a memory-based communication and/or synchronization scheme. This MBCF is a mechanism that does not require any special communication and/or synchronization hardware but uses a stock network interface card (NIC) to implement high-speed high-performance communication and/or synchronization with remote memory operation only by software.

### Citation List

### Non Patent Literature

Non Patent Literature 1: MATSUMOTO, Takashi: A Study on Memory-Based Communications and Synchronization in Distributed-Memory Systems. Dissertation Thesis, Graduate School of Science, Univ. of Tokyo (February 2001).

### Summary of Invention

### Technical Problem

Specifically, the MBCF is configured using a computer including a processor including a translation lookaside buffer (TLB), a physical memory, and a network interface controller (NIC) directly accessible to the physical memory. For example, a process of a transmission source computer (hereinafter, a transmission-side process) transmits an operation request packet including an identifier of an operation target process (hereinafter, a reception-side process) that defines a process of a transmission destination computer, an operation target address that defines a memory area of the reception-side process, a data size to be written, and a data sequence. Then, the transmission destination computer receives the operation request packet transmitted by the transmission-side process, and stores the data sequence in the memory area defined by the reception-side process and the operation target address.

In a parallel and distributed computing system in which a plurality of computers are coupled via a data link, an MBCF is provided as a means for implementing remote memory operations. In a conventional MBCF, a transmission-side process can rewrite a memory in a reception-side process without synchronizing with the reception-side process, and this is a major factor of high flexibility and high performance of communication by the MBCF. However, on the other hand, even if the memory of the reception-side process is rewritten by the transmission-side process, the reception-side process cannot recognize which memory has been changed. In a case where a change in a memory content causes another data change in a reception-side process, not knowing where the change is made can be a major disadvantage.

Therefore, the present invention has been made to solve the above problems, and a main object thereof is to provide a means that enables a reception-side process on which a remote memory operation has been performed to recognize the content of the memory operation and perform necessary processing at low cost in a parallel and distributed computing system in which a plurality of computers including a processor including a translation lookaside buffer (TLB), a physical memory, and a network interface controller (NIC) directly accessible to the physical memory are interconnected via a data link.

### Solution to Problem

That is, a parallel and distributed computing system according to the present invention is a parallel and distributed computing system in which a plurality of computers including a processor including a translation lookaside buffer (TLB), a physical memory, and a network interface controller (NIC) directly accessible to the physical memory are interconnected via a data link, wherein a process of a transmission source computer (hereinafter, a transmission-side process) transmits an operation request packet including an identifier of an operation target process (hereinafter, a reception-side process) that defines a process of a transmission destination computer, an operation target address that defines a memory area of the reception-side process, a data size to be written, a data sequence, and a structure address that defines a history memory area for temporarily recording an operation content history in the reception-side process, and the transmission destination computer receives the operation request packet, stores the data sequence in the memory area defined by the reception-side process and the operation target address, and records the operation target address, the data size written, and information of the transmission-side process in the history memory area as operation content.

According to such a parallel and distributed computing system, in the parallel and distributed computing system in which a plurality of computers are interconnected via a data link, and the plurality of computers perform communication and/or synchronization by MBCF with each other, an operation request packet transmitted by a transmission-side process to a reception-side process includes a structure address that defines a history memory area for temporarily recording an operation content history in the reception-side process, and a transmission destination computer receives the operation request packet and records the operation target address, the data size written, and information of the transmission-side process in the history memory area as operation content. Therefore, it is possible to provide a means by which the reception-side process can recognize the content of the memory operation and perform necessary processing at low cost by referring to the history memory area.

It is conceivable that a computer in which the reception-side process exists activates an asynchronous user function to the reception-side process at a time point when the operation content history is accumulated in the history memory area.

It is conceivable that the transmission destination computer saves, in the history memory area, data before being overwritten in the memory area of the reception-side process.

It is conceivable that the transmission-side process transmits an operation request packet including an identifier of an operation target process (hereinafter, a reception-side process) that defines a process of a transmission destination computer, an operation target address that defines a table area on a memory of the reception-side process, information of a row and a column in a table, a data size to be written, a data sequence, and a structure address that defines a history memory area for temporarily recording an operation content history in the reception-side process, and
the transmission destination computer receives the operation request packet, reads data from an area defining the table area defined by the reception-side process and the operation target address, obtains a memory address corresponding to the row and the column defined in the operation request packet, stores the data sequence from the memory address, and records the operation target address, information of the row and the column, the data size written, and information of the transmission-side process in the history memory area as operation content.

It is conceivable that the transmission destination computer activates an asynchronous user function to the reception-side process at a time point when the operation content history is accumulated in the history memory area.

It is conceivable that the transmission destination computer saves, in the history memory area, data before being overwritten in the table area of the reception-side process. Advantageous Effects of Invention

According to the present invention configured as described above, it is possible to provide a means for notifying the operation content to the reception-side process at low cost in the remote memory write operation by the MBCF.

### Brief Description of Drawings

FIG. 1 is a diagram schematically illustrating an overall configuration of a parallel and distributed computing system according to an embodiment of the present invention.
FIG. 2 is a schematic diagram illustrating physical configurations of a transmission source computer and a transmission destination computer according to the embodiment.
FIG. 3 is a schematic diagram illustrating a use environment of MBCF_WRITE of the embodiment.
FIG. 4 is a schematic diagram illustrating an operation procedure of operation request packet transmission including a packet generation process on the operation request side according to the embodiment.
FIG. 5 is a schematic diagram illustrating a situation in which an operation request packet has arrived at a reception-side node according to the embodiment.
FIG. 6 is a schematic diagram illustrating MBCF-related processing in a packet reception interrupt routine in a reception-side node of the embodiment.
FIG. 7 is a schematic diagram illustrating a situation in which an MBCF_FIFO operation request packet arrives at the reception-side node of the embodiment.
FIG. 8 is a schematic diagram illustrating a situation after data is stored in MBCF_FIFO in the reception-side node of the embodiment.
FIG. 9 is a schematic diagram illustrating a situation after the operation history is stored in MBCF_WRITE_wLOG in the reception-side node of the embodiment.
FIG. 10 is a schematic diagram illustrating a situation after the operation history is stored in MBCF_TABLE_wLOG in the reception-side node of the embodiment. Reference Signs List

- 100: parallel and distributed computing system
- 2: computer
- 2X: transmission source computer
- 2Y: transmission destination computer
- 21: processor
- 22: physical memory
- 23: network interface controller (NIC)
- 3: data link

### Description of Embodiment

Hereinafter, a parallel and distributed computing system 100 according to an embodiment of the present invention will be described with reference to the drawings.

### < 1. System Configuration>

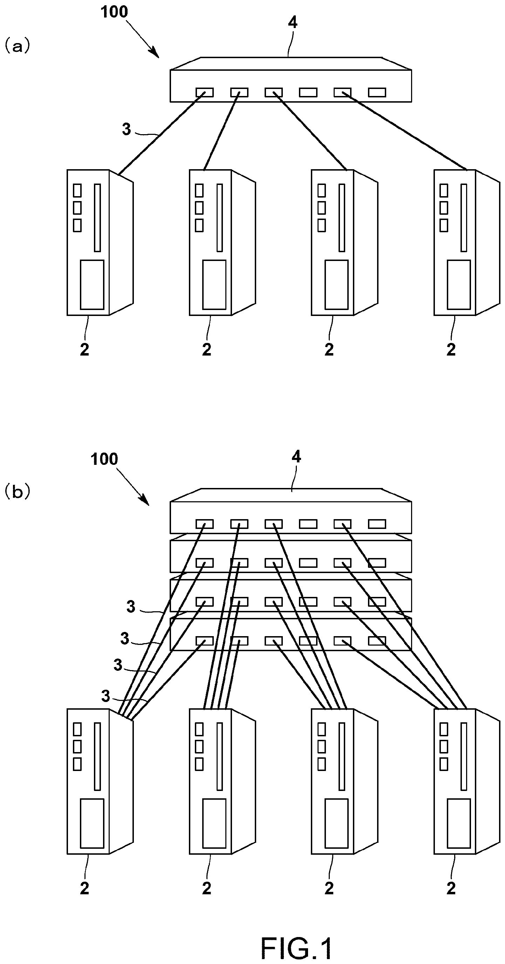

As illustrated in FIG. 1 (a), a parallel and distributed computing system 100 of the present embodiment is obtained by interconnecting a plurality of computers 2 to each other via a data link 3 and a switching hub device 4. In order to increase the data transfer bandwidth between the computers 2, as illustrated in FIG. 1 (b), a parallel and distributed computing system may be configured by interconnecting a plurality of computers 2 via a plurality of data links 3 and a switching hub devices 4.

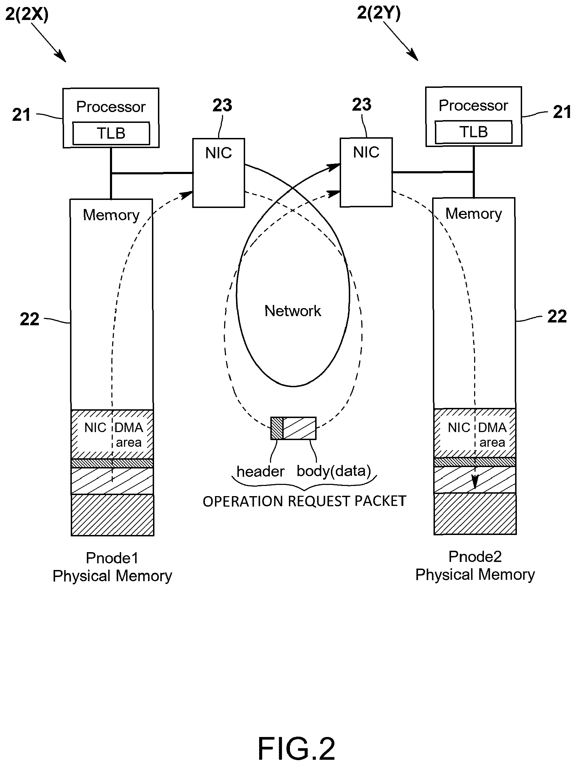

As illustrated in FIG. 2, each of the computers 2 includes a processor 21 including a translation lookaside buffer (TLB), a physical memory 22, and a network interface controller (NIC: network interface card) 23 directly accessible to the physical memory 22.

And the parallel and distributed computing system 100 does not require any special communication and/or synchronization hardware but uses a stock network interface card (NIC) 23 to construct a memory-based communication facility (MBCF) to implement high-speed high-performance communication and/or synchronization by remote memory operations only by software. Specifically, the parallel and distributed computing system 100 constructs a memory-based communication facility (MBCF) by an operating system (OS) stored in a kernel space of each computer 2.

The parallel and distributed computing system 100 has variations of various operation commands such as a WRITE command (MBCF_WRITE) for performing remote memory writing and a READ command (MBCF_READ) for performing remote memory reading described below.

For example, a process of a transmission source computer 2 (2X) (hereinafter, a transmission-side process) transmits an operation request packet including an identifier of an operation target process (hereinafter, a reception-side process) that defines a process of a transmission destination computer 2 (2Y), an operation target address that defines a memory area of the reception-side process, a data size to be written, and a data sequence, and the transmission destination computer 2 receives the operation request packet and stores the data sequence in the memory area defined by the reception-side process and the operation target address (MBCF_WRITE).

In addition, the transmission-side process transmits an operation request packet including an identifier of an operation target process (hereinafter, a reception-side process) that defines a process of the transmission destination computer 2 (2Y), an operation target address that defines a memory area of the reception-side process, a data size to be read, and a data storage area address of the transmission-side process, and the transmission destination computer 2 (2Y) receives the operation request packet, reads a data sequence from the memory area defined by the reception-side process and the operation target address, and returns the data sequence to the data storage area of the transmission-side process (MBCF_READ).

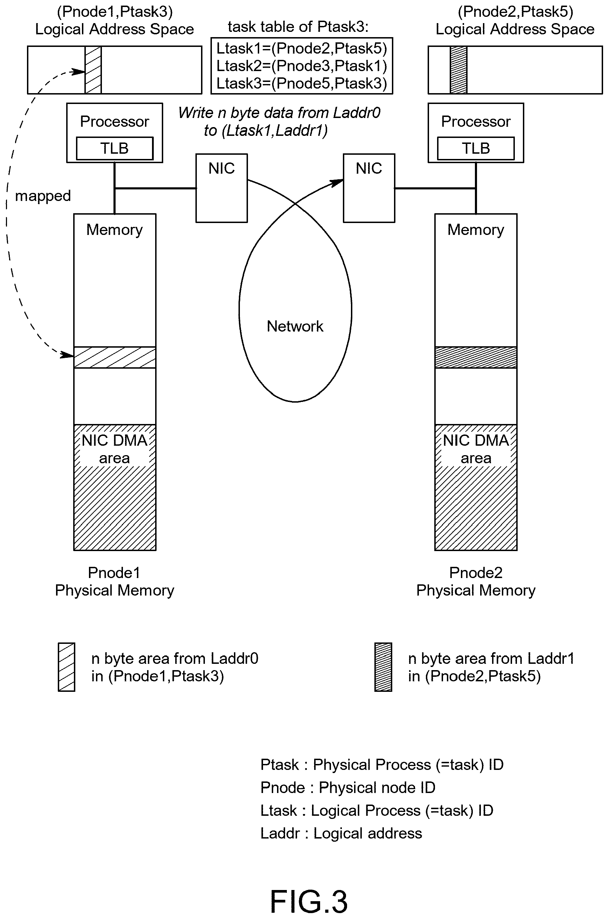

Here, the procedure of MBCF_WRITE will be described in detail with reference to FIGS. 3 to 6. The basic procedure is common to other commands.

FIG. 3 illustrates a use environment of MBCF_WRITE, in which Pnode1 is a transmission source node (transmission source computer) of the operation request packet, and Pnode2 is a reception-side node (transmission destination computer). The processor of the transmission source node creates a packet image including a header in which delivery information is written in a NIC DMA area of its own memory and a payload. The NIC DMA area memory can be directly accessed by the NIC for transmission or reception. When the generation of the packet image for transmission is completed, the processor instructs the NIC to start a transmission operation by DMA reading (kick operation). The reception-side node (Pnode2) has a ring buffer for packets arriving in the NIC DMA area of its own memory. The NIC of the reception-side node determines whether the packet is a packet addressed to its own node (normally, the determination is made by the MAC address), and generates a copy of the packet addressed to its own node in the ring buffer. The NIC then generates a hardware interrupt to inform the processor of the reception-side node of the arrival of the packet.

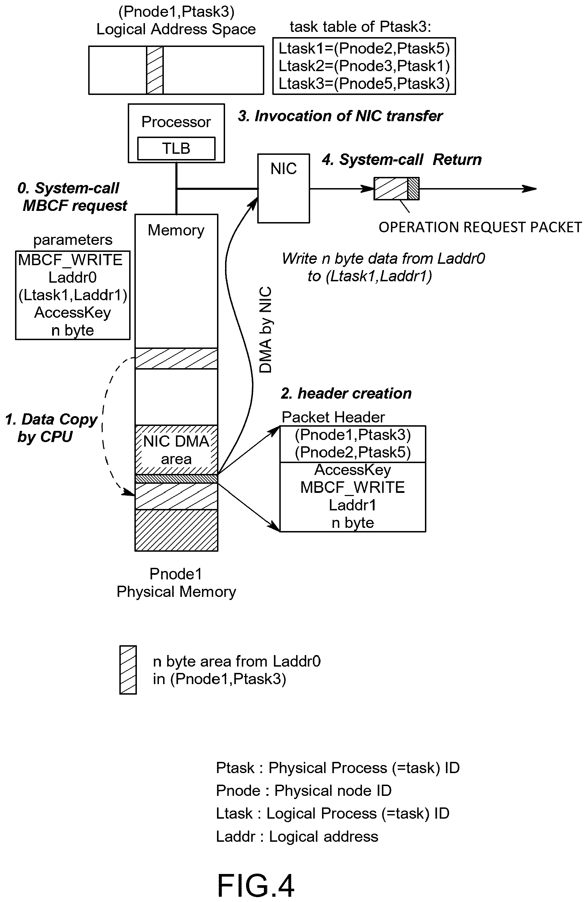

Next, with reference to FIG. 4, an operation procedure of operation request packet transmission including a packet generation process on the operation request side will be described.

In the transmission-side process (request side task), parameters including an identifier [Ltask1] of the reception-side process (request destination task), an operation target address [Laddr1] of the reception-side process, an access key [AccessKey] for memory space operation of the reception-side process, a command type [MBCF_WRITE] of the MBCF, a data size [n] for performing remote writing, and a pointer [Laddr0] to the head of an area storing data to be written are prepared. Then, the MBCF request transmission system call is called with these parameters. Upon receiving the system call, the OS refers to the task table of the transmission-side process and converts the logical task ID indicating the reception-side process into a physical task ID [(Pnode2, Ptask5)]. Since the physical task ID includes Pnode2 which is a physical node ID, route information (delivery destination information) to the reception-side node can be set from this information. If the network to be used is Ethernet, the MAC address is used as the delivery destination information. This delivery destination information enables the NIC to deliver the operation request packet to the reception-side node. Then, the OS causes the NIC to transmit the operation request packet.

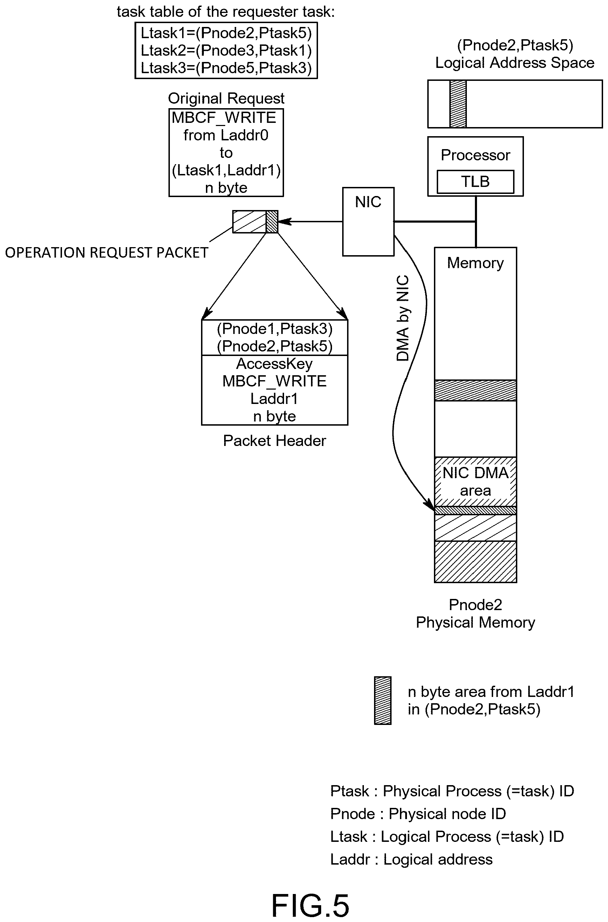

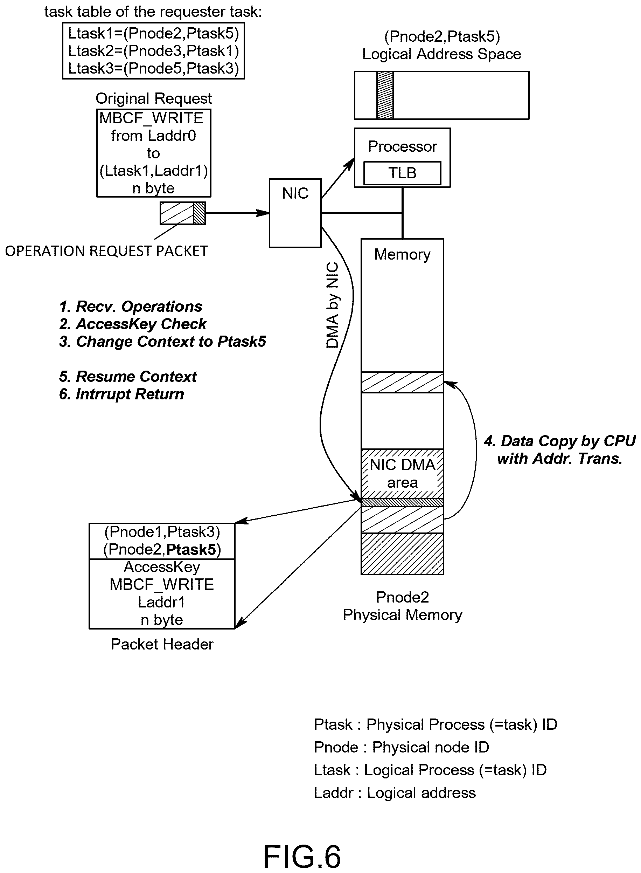

Next, with reference to FIGS. 5 and 6, a reception procedure of the operation request packet at the operation request destination will be described.

FIG. 5 illustrates a situation in which the operation request packet arrives at the reception-side node. The operation request packet is carried by the network to the reception-side node [Pnode2]. Upon packet arrival, the NIC of the reception-side node copies the data image of the operation request packet to the ring buffer by DMA, and then generates an interrupt signal to inform the processor of the reception-side node that the packet has arrived.

FIG. 6 illustrates MBCF-related processing in the packet reception interrupt routine in the reception-side node. Due to the occurrence of the reception interrupt from the NIC, the control of the processor of the reception-side node is switched to the packet reception routine, and the low-level packet reception procedure required by the NIC is executed first. After the low-level reception procedure, in the packet reception routine, first, the reception-side process is specified from the physical task ID (Ptask5 in the drawing). Specifically, a pointer to a process structure of the process is obtained. Then, it is checked whether the AccessKey in the operation request packet matches that of the reception-side process, and only if there is a match, the memory operation in the memory space of the reception-side process is allowed. If there is a match, the context of the memory space is switched to that of the reception-side process, and the n-byte data carried in the operation request packet is written from the logical address (Laddr1) by the store instruction of the user authority instead of as the privileged level. Then, the context of the memory space is returned to that at the time of occurrence of the interrupt. The processing in the interrupt routine is completed up to this point.

Next, the operation of the command (MBCF_FIFO) for registering data to the FIFO queue in the parallel and distributed computing system 100 will be described.

In MBCF_FIFO, an operation of a transmission-side process (request side task) is almost the same as that of MBCF_WRITE. The difference is that MBCF_WRITE of the command is replaced with MBCF_FIFO, and a destination indicated in the reception-side process (reception-side task) by the destination operation target address [Laddr1] is not an area for storing data but a FIFO structure in which a plurality of pointers defining a FIFO queue are stored. Therefore, description of the operation of the transmission-side process (request side task) of MBCF_FIFO will be omitted.

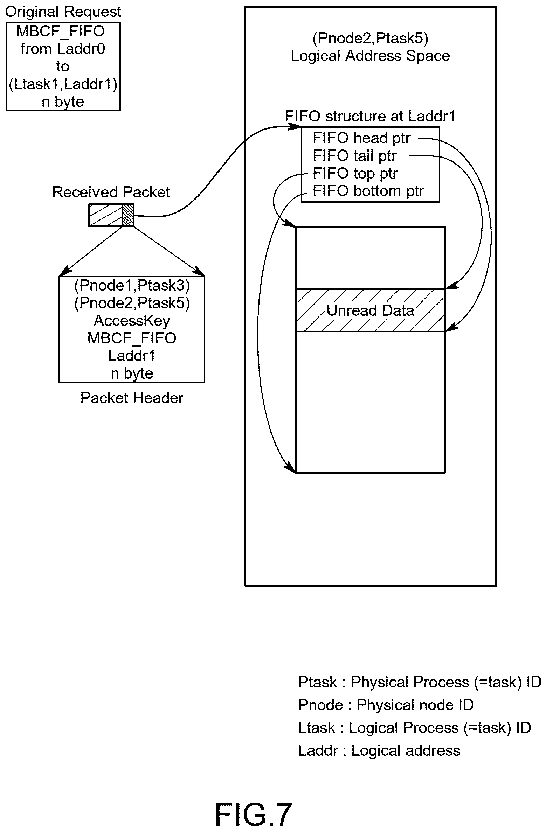

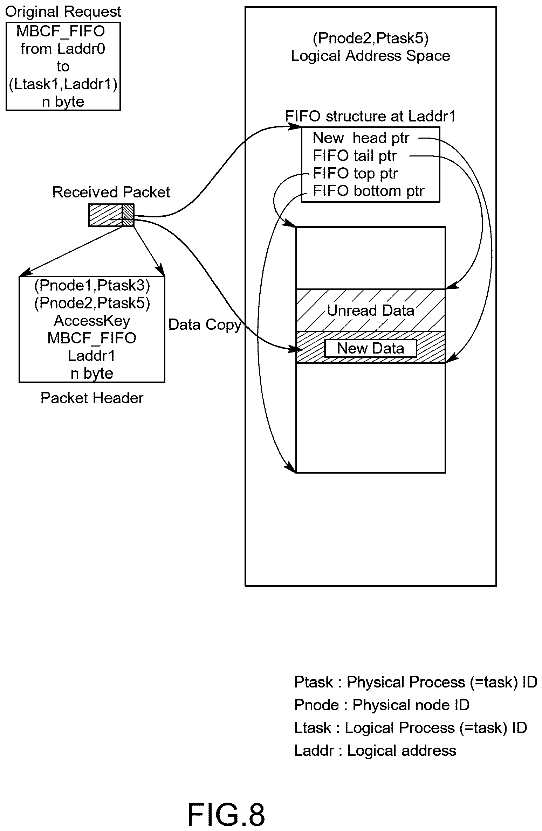

FIG. 7 illustrates the status of the FIFO structure and FIFO queue in the reception-side process (request destination task) when an MBCF_FIFO operation request packet arrives at the request destination node (reception-side computer). Four pointers (four of top, head, tail, and bottom defining a ring buffer (buffer memory area)) and a state flag of the FIFO queue are stored in the FIFO structure (the state flag is omitted in the drawing). In the MBCF reception routine in the interrupt routine, the processor reads the pointer and the flag in the FIFO structure to be operated, and stores the data carried in the packet in the buffer area defined by the pointer and the flag. Thereafter, the value of the pointer in the FIFO structure is updated. FIG. 8 illustrates a situation after storing data in the FIFO queue and updating pointers in the FIFO structure. These memory operations in the request destination node are performed locally and inseparably. That is, since the operation is a node-local operation, an overhead cost is low, and it is ensured that other MBCF operation request packets do not access the FIFO structure of the same address during processing of the MBCF_FIFO operation request packet.

When the buffer defined by the FIFO structure is almost full and all the data carried by the MBCF_FIFO operation request packet cannot be stored, the operation of the MBCF reception routine at the request destination is canceled. More specifically, since the pointers of the FIFO structure are not updated at all, it is in the same state as no data is added to the FIFO queue.

Then, in the parallel and distributed computing system 100 of the present embodiment, a command (MBCF_WRITE_wLOG) in which the reception-side process records the operation history of the transmission-side process is implemented.

Specifically, the transmission-side process transmits an operation request packet (MBCF_WRITE_wLOG operation request packet) including an identifier of a reception-side process that defines a process of the transmission destination computer 2 (2Y), an operation target address that defines a memory area of the reception-side process, a data size to be written, a data sequence, and a structure address that defines a history memory area for temporarily recording an operation content history in the reception-side process.

Then, the transmission destination computer 2 (2Y) receives the MBCF_WRITE_wLOG operation request packet and stores the data sequence in the memory area defined by the reception-side process and the operation target address. In addition, the transmission destination computer 2 (2Y) records the operation target address, the written data size, and the information of the transmission-side process in the history memory area as the operation content.

Here, the FIFO queue of the MBCF is used as the history memory area for temporarily recording the operation history. The operation of the FIFO queue is defined and implemented by MBCF_FIFO (described above) or MBCF_FIFO_READ. However, the content registered in the FIFO queue as the history memory area is not data loaded in the operation request packet, but the transmission destination computer 2 (2Y) registers write operation content such as the identifier of the transmission-side process, the operation target address, and the write data size regarding the MBCF_WRITE_wLOG operation packet. As described above, by diverting the FIFO queue (registering the operation history instead of the data) as the history memory area, it is possible to save time and effort to develop a new function and to reduce the amount of code.

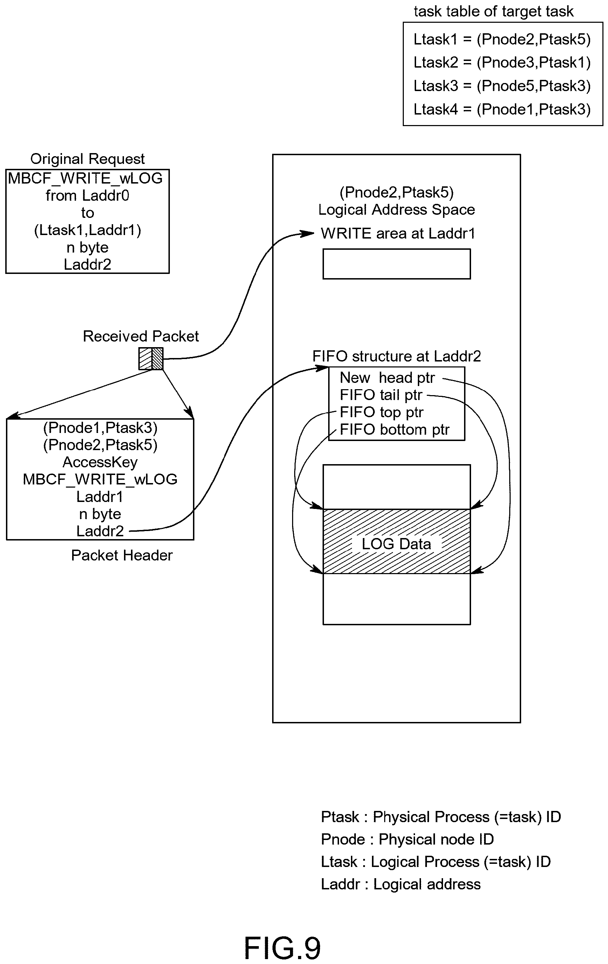

FIG. 9 illustrates a state of the memory in the reception-side process (request destination task) when the MBCF_WRITE_wLOG operation request packet arrives at the request destination node (transmission destination computer). A data sequence carried in the operation request packet is stored by n bytes from the address of Laddr1, a FIFO structure at the address of Laddr2 defines a FIFO queue as a history memory area, and write operation content is registered in the FIFO queue. Similarly to the FIFO queue for user data registration, four pointers (four of top, head, tail, and bottom defining a ring buffer (buffer memory area)) and a state flag of the FIFO queue are stored in the FIFO structure (the state flag is omitted in the drawing). In the MBCF reception routine in the interrupt routine, the processor of the transmission destination computer 2 (2Y) reads the pointer and the flag in the FIFO structure as the operation target, and stores the operation target address (Laddr1), the written data size (n), and the information of the transmission-side process (Ltask4) in the buffer area (history memory area) defined by the pointer and the flag as the operation content (LOG DATA). Thereafter, the value of the pointer in the FIFO structure is updated. Note that, in a case where the FIFO queue overflows, if it is determined that there is no remote write, the operation content is registered in the FIFO queue first, and only in a case where the operation content has been registered, n-bytes data is written from the address of Laddr1.

In addition, the transmission destination computer 2 (2Y) in which the reception-side process exists activates, to the reception-side process, an asynchronous user function that checks the content of the history memory area and performs a necessary operation at a time point when the operation content history is accumulated in the history memory area by a certain amount or more. In addition, the transmission destination computer 2 (2Y) is configured to save the data before being overwritten in the memory area of the reception-side process in the history memory area so that the reception-side process can perform rollback operations of remote writing and calculate various kinds of statistical calculations including summations at low cost.

The usefulness of leaving a log of the write operation in the history memory will be specifically described below. Assume that a large data area exists in the reception-side process, and the statistical data is calculated in the reception-side process. Assume that the data area is in a tabular form, a numerical value is stored in each item, a reception-side process calculates a sum and an average of columns and a sum and an average of rows, and the sum and the average are stored as statistical data in another area. In a situation where there is no write operation log, since the reception-side process does not know which data has been updated, it is necessary to recalculate the sum and the average for all columns and all rows. On the other hand, if the address and size of the updated data are found from the history memory, it is possible to determine which row or which column needs to be recalculated from the information. Therefore, it is possible to limit the rows and columns to be recalculated to only where the update is made, and it is possible to significantly reduce the processing cost of the reception-side process. When the data before the update is left in the history memory, the sum of the rows and the columns can be calculated by subtracting the numerical value before the update from the sum before the recalculation and adding a new numerical value. Therefore, the sum of the rows and the columns can be obtained without even accessing the entire data of the rows or columns, and the average value can also be calculated.

In addition, in the parallel and distributed computing system 100 of the present embodiment, not only a tabular write command (MBCF_TABLE) that does not leave an operation history but also a tabular write command (MBCF_TABLE_wLOG) that leaves an operation history is implemented. These commands are remote write commands that do not directly specify a remote write address, but specify an area in which information defining a table in a reception-side process is stored as an operation target address, and specify a data storage location by information of a row and a column in the table. Note that MBCF_TABLE is only different from MBCF_TABLE_wLOG in not leaving an operation history, and MBCF_TABLE_wLOG will be described below.

In MBCF_TABLE_wLOG, a transmission-side process transmits an MBCF_TABLE_wLOG operation request packet including an identifier of a reception-side process that defines a process of a transmission destination computer 2 (2Y), an operation target address that defines a table area on a memory of the reception-side process, information of a row and a column in the table, a data size to be written, a data sequence, and a structure address that defines a history memory area for temporarily recording an operation content history in the reception-side process.

Then, the transmission destination computer 2 (2Y) receives the MBCF_TABLE_wLOG operation request packet, reads data from an area defining the table area specified by the reception-side process and the operation target address, obtains a memory address corresponding to the row and the column specified by the transmission-side process and stored in the operation request packet, and stores the data sequence from the address. In addition, the transmission destination computer 2 (2Y) records the operation target address, the information of the row and the column, the written data size, and the information of the transmission-side process in the history memory area as the operation content.

Here, the FIFO queue of the MBCF is used as the history memory area for temporarily recording the operation history. The operation of the FIFO queue is defined and implemented by MBCF_FIFO or MBCF_FIFO_READ described above. However, the content registered in the FIFO queue as the history memory area is not data loaded in the operation request packet, but the transmission destination computer 2 (2Y) registers the write operation content such as the identifier of the transmission-side process, the operation target address, and the write data size regarding the MBCF_TABLE_wLOG operation packet. As described above, by diverting the FIFO queue (registering the operation history instead of the data) as the history memory area, it is possible to save time and effort to develop a new function and to reduce the amount of code.

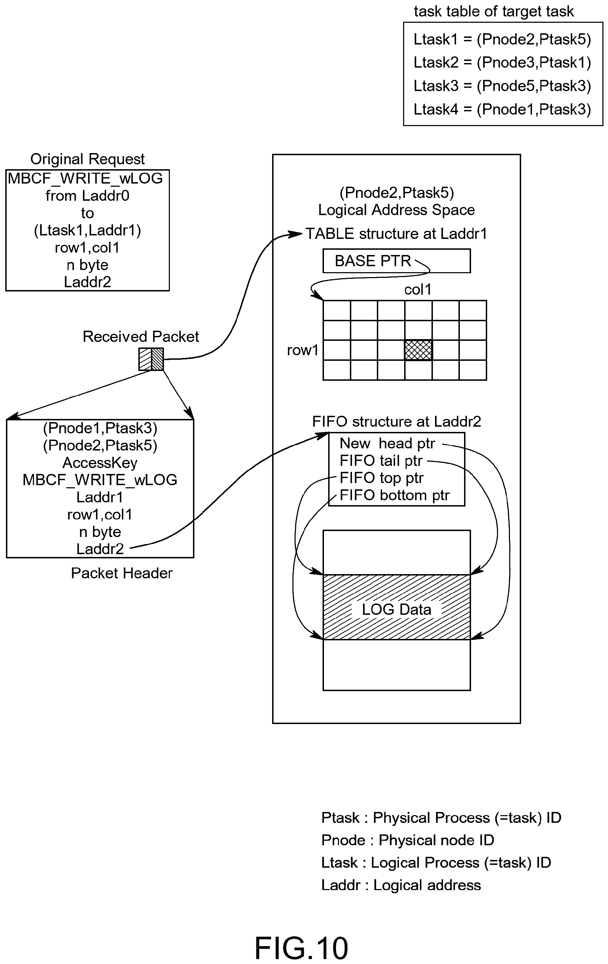

FIG. 10 illustrates a state of the memory in the reception-side process (request destination task) when the MBCF_TABLE_wLOG operation request packet arrives at the request destination node (transmission destination computer). The data sequence carried in the operation request packet is stored by n bytes as the data of the cell of the specified row and column of the table memory area defined by the TABLE structure at the address of Laddr1, the FIFO structure at the address of Laddr2 defines the FIFO queue as the history memory area, and the write operation content is registered in the FIFO queue. Similarly to the FIFO queue for user data registration, four pointers (four of top, head, tail, and bottom defining a ring buffer (buffer memory area)) and a state flag of the FIFO queue are stored in the FIFO structure (the state flag is omitted in the drawing). In the MBCF reception routine in the interrupt routine, the processor of the transmission destination computer 2 (2Y) reads the pointer and the flag in the FIFO structure as the operation target, and stores the operation target address (Laddr1), the information of the row (row1) and the column (coll), the written data size (n), and the information of the transmission-side process (Ltask4) in the buffer area (history memory area) defined by the pointer and the flag as the operation content (LOG DATA). Thereafter, the value of the pointer in the FIFO structure is updated. Note that, in a case where the FIFO queue overflows, if it is determined that there is no remote write, the operation content is registered in the FIFO queue first, and only in a case where the operation content has been registered, n-byte data is written to the table defined by the TABLE structure of the address of Laddr1. Since MBCF_TABLE_wLOG is a write command to the cell in the table, the content of the cell itself replaces the data in the request packet. That is, when information about not only the start address of the table area but also the size of each cell and the number of bytes of the entire row is present in the TABLE structure and n is smaller than the specified cell size, the entire cell is deleted and new n-byte data is written, and when n is larger than the cell size, a portion overflowing from the cell is not stored.

In addition, the transmission destination computer 2 (2Y) in which the reception-side process exists activates, to the reception-side process, an asynchronous user function that checks the content of the history memory area and performs a necessary operation at a time point when the operation content history is accumulated in the history memory area by a certain amount or more. In addition, the transmission destination computer 2 (2Y) is configured to save the data before being overwritten in the memory area of the reception-side process in the history memory area so that the reception-side process can perform rollback operations of remote writing and calculate various kinds of statistical calculations including summations at low cost.

The usefulness of leaving a log of the write operation in the history memory will be specifically described below. Assume that a large tabular data area exists in the reception-side process and the statistical data is calculated in the reception-side process. Assume that a numerical value is stored in each item of the table, and the reception-side process calculates a total sum and an average of columns and a total sum and an average of rows and stores them as statistical data in another area. In a situation where there is no write operation log, since the reception-side process does not know which data has been updated, it is necessary to recalculate the sum and the average for all columns and all rows. On the other hand, if the row and column of the updated data are found from the history memory, it is possible to limit the rows and columns to be recalculated to only where the update is made, and it is possible to significantly reduce the processing cost of the reception-side process. When the data before the update is left in the history memory, the sum of the rows and the columns can be calculated by subtracting the numerical value before the update from the sum before the recalculation and adding a new numerical value. Therefore, the sum of the rows and the columns can be obtained without even accessing the entire data of the rows or columns, and the average value can also be calculated.

### <2. Effects of Present Embodiment>

According to the parallel and distributed computing system 100 of the present embodiment configured as described above, in the parallel and distributed computing system 100 in which the plurality of computers 2 are interconnected via the data link 3, and the plurality of computers 2 perform communication and/or synchronization by MBCF with each other, the operation request packet transmitted by the transmission-side process to the reception-side process includes the structure address that defines the history memory area for temporarily recording the operation content history in the reception-side process, and the transmission destination computer receives the operation request packet and records the operation target address, the written data size, and the information of the transmission-side process in the history memory area as the operation content. Therefore, the reception-side process can recognize the content of the memory operation and perform necessary processing at low cost.

In addition, the present invention is not limited to the above embodiment, and it goes without saying that various modifications can be made without departing from the gist of the present invention.

### Industrial Applicability

According to the present invention, it is possible to provide a means that enables a reception-side process on which a remote memory operation has been performed by MBCF to recognize the content of the memory operation and perform necessary processing at low cost.

## Claims

1. A parallel and distributed computing system in which a plurality of computers including a processor including a translation lookaside buffer (TLB), a physical memory, and a network interface controller (NIC) directly accessible to the physical memory are interconnected via a data link, wherein
a process of a transmission source computer (hereinafter, a transmission-side process) transmits an operation request packet including an identifier of an operation target process (hereinafter, a reception-side process) that defines a process of a transmission destination computer, an operation target address that defines a memory area of the reception-side process, a data size to be written, a data sequence, and a structure address that defines a history memory area for temporarily recording an operation content history in the reception-side process, and
the transmission destination computer receives the operation request packet, stores the data sequence in the memory area defined by the reception-side process and the operation target address, and records the operation target address, the data size written, and information of the transmission-side process in the history memory area as operation content.

2. The parallel and distributed computing system according to claim 1, wherein a computer in which the reception-side process exists activates an asynchronous user function to the reception-side process at a time point when the operation content history is accumulated in the history memory area.

3. The parallel and distributed computing system according to claim 1 or 2, wherein the transmission destination computer saves, in the history memory area, data before being overwritten in the memory area of the reception-side process.

4. The parallel and distributed computing system according to claim 1, wherein the transmission-side process transmits an operation request packet including an identifier of an operation target process (hereinafter, a reception-side process) that defines a process of a transmission destination computer, an operation target address that defines a table area on a memory of the reception-side process, information of a row and a column in a table, a data size to be written, a data sequence, and a structure address that defines a history memory area for temporarily recording an operation content history in the reception-side process, and
the transmission destination computer receives the operation request packet, reads data from an area defining the table area defined by the reception-side process and the operation target address, obtains a memory address corresponding to the row and the column defined in the operation request packet, stores the data sequence from the memory address, and records the operation target address, information of the row and the column, the data size written, and information of the transmission-side process in the history memory area as operation content.

5. The parallel and distributed computing system according to claim 4, wherein the transmission destination computer activates an asynchronous user function to the reception-side process at a time point when the operation content history is accumulated in the history memory area.

6. The parallel and distributed computing system according to claim 4 or 5, wherein the transmission destination computer saves, in the history memory area, data before being overwritten in the table area of the reception-side process.
